# EUROPÄISCHE PATENTANMELDUNG

(11) **EP 0 872 445 A2**
(43) Veröffentlichungstag der Anmeldung: **21.10.1998**
(21) Anmeldenummer: 98106602.0
(22) Anmeldetag: 09.04.1998
(51) Int. Cl.: B66F 9/06

(54) **Transportsystem**

(30) Priorität: 14.04.1997 DE 19715377
(71) Anmelder: INDUMAT GmbH & Co. KG Transport- und Lagersysteme, D-72770 Reutlingen (DE)
(72) Erfinder: Hofbauer, Ulrich, Dipl.-Ing. (TU), 71126 Gäufelden (DE)
(74) Vertreter: Kasseckert, Rainer

(57) **Zusammenfassung**

Flurförderzeug (F), insbesondere für ein fahrerloses Transportsystem, zum Entfernen leerer Transportbehälter (T2) und zum Bereitstellen gefüllter Transportbehälter (T1) an einem Arbeitsplatz, insbesondere an einer Montagelinie, wobei zwei auf den gleichen Platz zugreifende Übergabevorrichtungen (Ü1, Ü2) vorgesehen sind.

## Beschreibung

Die Erfindung betrifft ein Flurförderzeug, insbesondere für ein fahrerloses Transportsystem, zum Entfernen leerer Transportbehälter und zum Bereitstellen gefüllter Transportbehälter an einem Arbeitsplatz, insbesondere an einer Montagelinie.

An Montagelinien muß das Anbaumaterial für den Werker bereitgestellt werden. Diese Bereitstellung erfolgt meistens in unterschiedlich ausgebildeten Transportbehältern. Diese Transportbehälter werden in Zwischenlagern gepuffert und nach Abruf vom Montageband diesem zugeführt. Am Montageband steht dann ein leerer Transportbehälter und ein voller wird angeliefert. Zum Austausch der Behälter gibt es nun drei übliche Varianten:
1. Es stehen drei Plätze für Transportbehälter zur Verfügung. Damit gibt es immer einen leeren Platz, um den vollen Behälter abzusetzen und den leeren aufzunehmen. Nachteilig ist dabei der relativ große Platzbedarf.
2. Eine stationäre Fördertechnik, mit welcher die leeren und vollen Behälter ausgetauscht werden. Nachteilig sind dabei die hohen Investitionskosten, die geringe Flexibilität und der große Platzbedarf.
3. Austausch mit einem Stapler. Der Stapler bringt den vollen Behälter, setzt ihn im Gang ab, nimmt den leeren Behälter auf, stellt diesen in den Gang ab, nimmt den vollen Behälter wieder auf und stellt ihn auf den freien Platz. Nun wird der leere Behälter aufgenommen und zum Zwischenlager gebracht. Diese Vorgehensweise ist sehr zeitaufwendig; der Gang ist während der Wechselzeit für weitere Transporte gesperrt.

Der Erfindung liegt daher die Aufgabe zugrunde, ein Transportsystem vorzuschlagen, welches diese genannten Nachteile vermeidet.

Diese Aufgabe wird erfindungsgemäß gelöst von einem Transportsystem mit einem Fahrzeug, das zwei Übergabevorrichtungen hat, die auf den gleichen Platz zugreifen.

Die erfindungsgemäße Lösung vermeidet ein Hin- und Herrangieren oder ein Blockieren des Ganges, da das Fahrzeug in einer festen Stellung den leeren Behälter aufnehmen und den vollen Behälter auf den gleichen Platz absetzen kann.

Dadurch ist es auch nicht mehr nötig, einen dritten Platz für den Behälter vorzusehen, wodurch die Arbeitsplätze der Werker an der Montagelinie enger beieinander angeordnet sein können. Durch die Realisierung mit einem Flurförderzeug, insbesondere einem fahrerlosen Transportsystem, werden auch noch die Vorteile der größeren Flexibilität (keine Schienen, sondern frei programmierbares Fahrzeug) oder der Vorteil - bei Verwendung eines fahrerlosen Transportfahrzeugs (FTF) -, daß kein Fahrer benötigt wird, erreicht.

In einer bevorzugten Ausführungsform ist das Fahrzeug so ausgebildet, daß eine der Übergabevorrichtungen im wesentlichen horizontal fördert, während die zweite Übergabevorrichtung vertikal und horizontal fördern kann. Die Vertikalkomponente bei einer der Übergabevorrichtungen ist notwendig, damit der leere Behälter angehoben werden kann, um Platz für den vollen Behälter zu machen, ohne daß ein dritter Platz oder ein Rangieren des Fahrzeugs notwendig wird.

In einer bevorzugten Ausführungsform ist die zweite Übergabevorrichtung so ausgebildet, daß sie den von ihr ergriffenen Transportbehälter während des Umladens - und/oder auch während der Fahrt - über den Transportbehälter der ersten Übergabevorrichtung anhebt.

In einer Ausführungsform kann die erste Übergabevorrichtung eine Querschubvorrichtung sein, die ihren Behälter im wesentlichen horizontal bewegt (abgesehen von kleinen Vertikalbewegungen zum Anheben und Absetzen). Die zweite Übergabevorrichtung enthält z.B. einen Hubmast zur Horizontalanhebung ihres Behälters und eine Schubvorrichtung zur Querbewegung des Behälters auf den vorgesehenen Platz, dieser liegt bevorzugt neben dem Fahrzeug, gesehen in Fahrtrichtung.

In einer weiteren Ausführung kann vorgesehen sein, daß die zweite Übergabevorrichtung neben den Bewegungsmöglichkeiten Auf/Ab und quer zum Fahrzeug (also links und rechts) bei den die Behälter greifenden Elementen auch noch Bewegungskomponenten in Fahrzeugrichtung oder gegen Fahrzeugrichtung hat. Dies erlaubt ein exaktes Anpassen der Greifvorrichtung auf die unterschiedlichen Größen der Behälter.

In einer weiteren Ausführungsform kann die zweite Übergabevorrichtung derart ausgebildet sein, daß sie eine Schwenkbewegung durchführt, die die Vertikal- und Horizontalkomponenten beinhaltet. Diese Ausführung ist von der Bewegung her besonders einfach und kann auch relativ leicht gebaut werden, wenn man den Betrieb so durchführt, daß die Schwenkvorrichtung immer nur den leeren oder teilweise entleerten Behälter anhebt.

Die Erfindung wird anhand von drei Figuren näher erläutert.

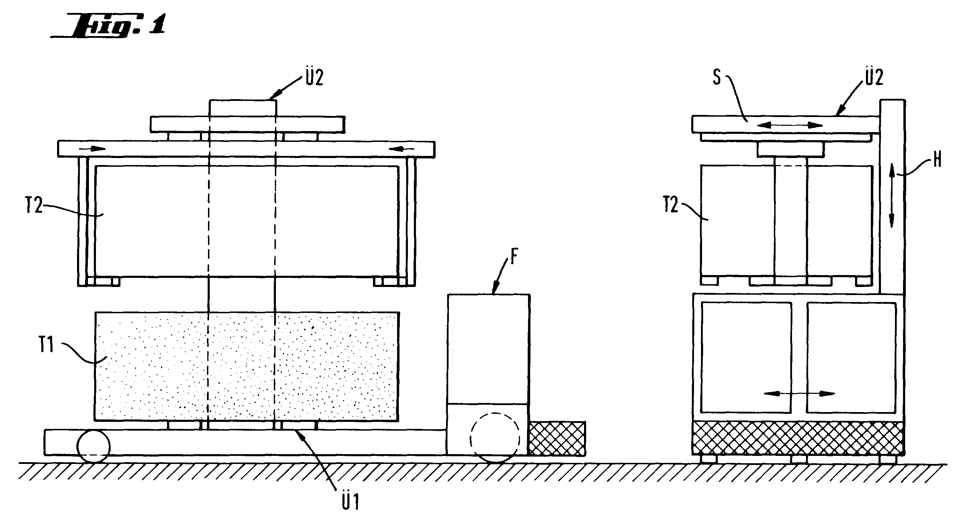

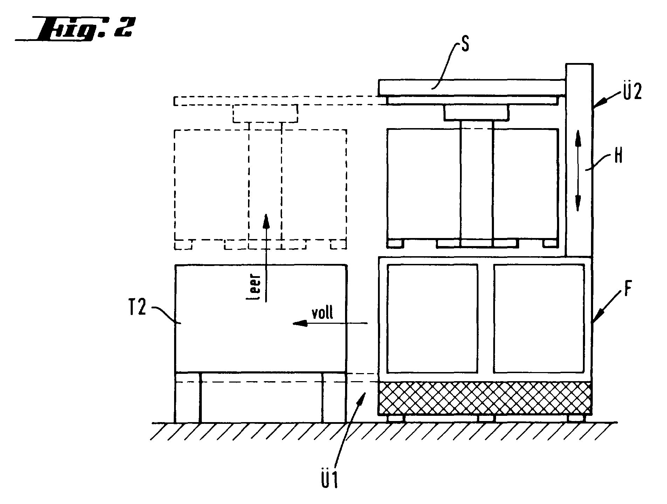

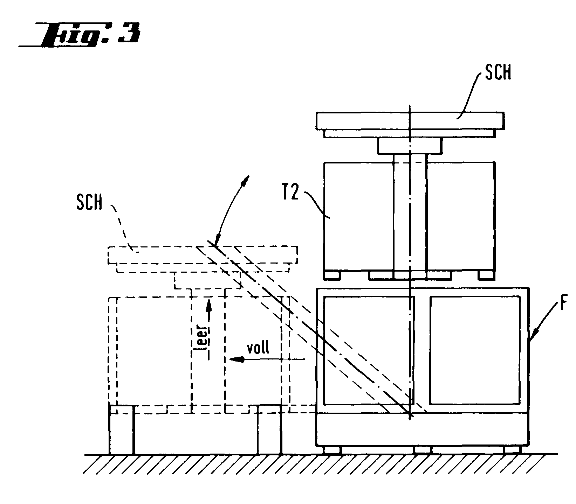

Figuren 1 und 2 zeigen eine erfindungsgemäße Ausführung eines Flurförderzeugs. Figur 3 zeigt eine weitere Ausführung eines erfindungsgemäßen Flurförderzeugs.

Figur 1 zeigt ein erfindungsgemäßes Flurförderzeug, hier in der Ausführung eines fahrerlosen Transportfahrzeugs F von der Seite und von vorne gesehen. Das Fahrzeug F hat zwei Plätze für die Transportbehälter T1 und T2. Mit T1 sei hier der volle Transportbehälter bezeichnet, mit T2 ein leerer Transportbehälter. Der volle Transportbehälter T1 steht auf einer Übergabevorrichtung Ü1, die im wesentlichen einen Querschub des Transportbehälters T1 bewirkt, so daß der Behälter T1 neben dem Fahrzeug abgestellt werden kann. Diese Bewegungsmöglichkeit ist durch den Pfeil angedeutet, der unten auf dem Fahrzeug F in der rechts gezeigten Frontansicht eingezeichnet ist. Selbstverständlich führt Ü1 auch gewisse Auf- und Abbewegungen durch, wie sie zum Abstellen oder Aufnehmen der Last notwendig sind. Die Übergabevorrichtung Ü2 trägt den Behälter T2 und hat die Bewegungsmöglichkeiten Auf/Ab und ebenfalls seitlich des Fahrzeugs nach links oder rechts, wie im rechten Teilbild durch die Pfeile rechts und oben angedeutet ist.

Die zweite Übergabevorrichtung Ü2 des Fahrzeugs F ist in dieser Variante von einem Hubmast H und einer Schubvorrichtung S gebildet, wobei der Hubmast H eine Auf- und Abbewegung des Greifers für den Transportbehälter T2 durchführen kann (Pfeil in Fig. 1 ganz rechts), während die Schubvorrichtung S eine Querbewegung (Pfeile in Fig. 1 rechts oben) des Transportbehälters T2 durchführen kann, um den Transportbehälter T2 neben das Fahrzeug F zu bewegen.

Die Funktion des Fahrzeugs F wird am besten anhand der Figur 2 näher erläutert. Das Fahrzeug F ist mit dem vollen Transportbehälter T1 beladen (hier in der Frontansicht des Fahrzeugs F nicht zu erkennen, da der Behälter T1 hinter dem Motorgehäuse des Fahrzeugs F verborgen ist). Das Fahrzeug F fährt zu der Stelle, an der der leere Behälter T2 steht, fährt dann seinen Hubmast H unbeladen hoch, schiebt über die Schiebevorrichtung S seinen Greifer nach links über den leeren Transportbehälter T2, senkt den Greifer ab und ergreift den leeren Transportbehälter T2. Dann wird der leere Transportbehälter T2 angehoben (Pfeil in Fig. 2 links). Wenn der leere Behälter T2 höher gehoben ist als das Niveau der Oberkante des vollen Behälters T1, wird der leere Behälter T2 nach rechts über das Fahrzeug verfahren, während gleichzeitig der volle Behälter T1 aus dem Fahrzeug heraus quer auf den Platz verschoben werden kann, auf dem der leere Transportbehälter T2 vorher stand. Die beiden Übergabevorrichtungen Ü1 und Ü2 können also zur Zeitersparnis gleichzeitig arbeiten. Wenn der volle Behälter T1 auf seinem vorgesehenen Platz an der Montagelinie abgestellt ist, kann der leere Behälter T2 abwärts gefahren werden und auf dem Fahrzeug F abgestellt werden. Das Fahrzeug kann dann zum Lager zurückfahren.

Figur 3 zeigt eine zweite Ausführung eines erfindungsgemäßen Fahrzeugs F, wobei die zweite Übergabevorrichtung durch einen Schwenkarm SCH gebildet ist. Dieser Schwenkarm SCH ist unten an der Basis des Fahrzeug F angelenkt und kann den Greifer zur Seite, hier nach links, so bewegen, daß der Greifer einen Transportbehälter auf dem vorgesehenen Platz ergreifen und anheben kann (Bewegungsrichtung siehe Pfeil). Die Funktion ist wieder dem Fahrzeug der Figuren 1 und 2 entsprechend. Das Fahrzeug F ist mit dem vollen Transportbehälter T1 beladen, fährt neben die Stelle, an der der leere Behälter T2 steht, schwenkt den Schwenkarm SCH über den leeren Behälter T2, ergreift diesen und hebt ihn über den vollen Behälter T1. Dann wird der volle Behälter T1 über die Übergabevorrichtung Ü1 seitlich verschoben und abgesetzt, bis er auf dem Platz steht, auf dem vorher der leere Behälter T2 stand. Zur Rückfahrt in das Lager kann der leere Behälter am Fahrzeug wieder abgesetzt werden oder er bleibt am Schwenkarm SCH oben hängen, was eine rasche Rückgabe ins Lager erlaubt.

## Patentansprüche

1. Flurförderzeug (F), insbesondere für ein fahrerloses Transportsystem, zum Entfernen leerer Transportbehälter (T2) und zum Bereitstellen gefüllter Transportbehälter (T1) an einem Arbeitsplatz, insbesondere an einer Montagelinie, **dadurch gekennzeichnet**, daß zwei auf den gleichen Platz zugreifende Übergabevorrichtungen (Ü1, Ü2) vorgesehen sind.

2. Fahrzeug nach Anspruch 1, **dadurch gekennzeichnet**, daß eine der Übergabevorrichtungen (Ü1) im wesentlichen horizontal fördert, während die zweite Übergabevorrichtung (Ü2) vertikal und horizontal fördern kann.

3. Fahrzeug nach einem der vorhergehenden Ansprüche, **dadurch gekennzeichnet**, daß die zweite Übergabevorrichtung (Ü2) ihren Transportbehälter (T2) während des Wechselns über den Transportbehälter (T1) der ersten Übergabevorrichtung (Ü1) heben kann.

4. Fahrzeug nach einem der vorhergehenden Ansprüche, **dadurch gekennzeichnet**, daß die zweite Übergabevorrichtung (Ü2) einen Hubmast (H) zur Horizontalbewegung und eine Schubvorrichtung (S) zur Querbewegung aufweist.

5. Fahrzeug nach einem der vorhergehenden Ansprüche, **dadurch gekennzeichnet**, daß die zweite Übergabevorrichtung (Ü2) eine Vorrichtung zur Längsverstellung ihrer Greifer aufweist.

6. Fahrzeug nach einem der Ansprüche 1 bis 3, **dadurch gekennzeichnet**, daß die zweite Übergabevorrichtung (Ü2) einen Schwenkarm (SCH) aufweist.
